# EUROPEAN PATENT APPLICATION

(11) **EP 2 145 716 A1**
(43) Date of publication of application: **20.01.2010**
(21) Application number: 09165431.9
(22) Date of filing: 14.07.2009
(51) Int. Cl.: B23K 11/00

(54) **Welding method and welding structure of conductive terminals**

(30) Priority: 17.07.2008 JP 2008185514
(71) Applicant: OMRON CORPORATION, Kyoto-shi, Kyoto 600-8530 (JP)
(72) Inventor: Yasuda, Takeshi, Kyoto-shi Kyoto 600-8530 (JP); Nishioka, Akihiko, Kyoto-shi Kyoto 600-8530 (JP)
(74) Representative: Wilhelms · Kilian & Partner Patentanwälte

(57) **Abstract**

This invention provides a welding method and a welding structure capable of carrying out satisfactory weeding without forming a projection when joining the conductive terminals by resistance welding. A projection (22a, 22b) projecting in a direction orthogonal to a longitudinal direction of a metal plate (21a, 21b) is formed on one part of the metal plate (21a, 21b) as a welding place of when carrying out welding on a lead wire (11a, 11b), and the lead wire (11a) and the projection (22a) and the lead wire (11b) and the projection (22b) are resistance-welded with the longitudinal direction of the metal plates (21a, 21b) and the projecting direction of the projections (22a, 22b) orthogonal to each other.

## Description

### BACKGROUND OF THE INVENTION

### 1. TECHNICAL FIELD

The present invention relates to a welding method and a welding structure for joining conductive terminals by resistance welding.

### 2. RELATED ART

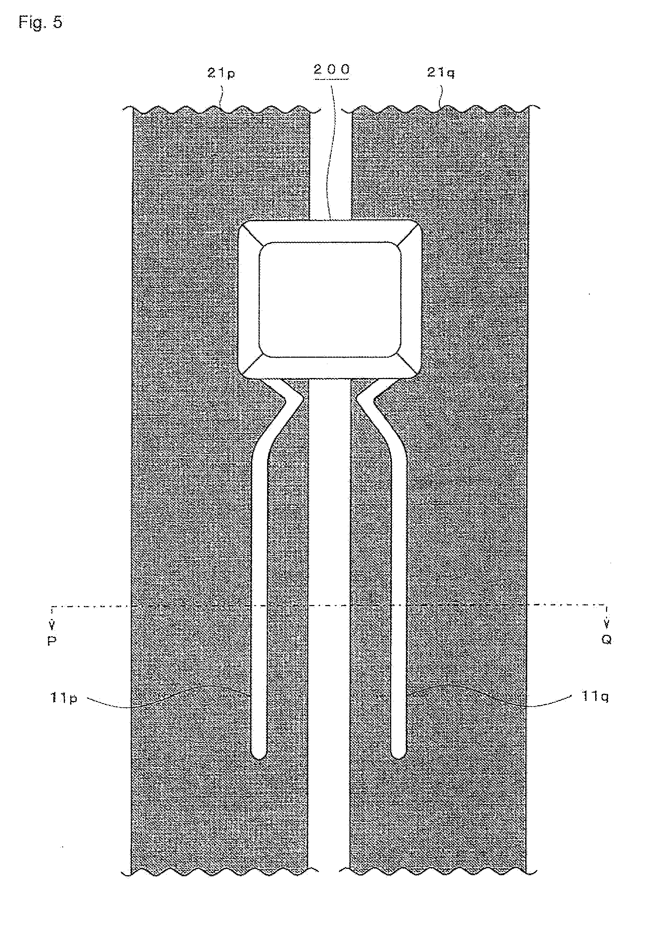

Fig. 5 is a view showing one example of electronic components normally arranged inside an electronic device (not shown).
In the figure, reference number 200 denotes a ceramic capacitor, which is one of the electronic components; and 11p and 11q denote lead wires of the ceramic capacitor 200. Furthermore, 21p and 21q denote metal plates for attaching the ceramic capacitor 200. For example, the lead wires 11p and 11q are made of steel wires having a diameter of 0.5 mm, and the metal plates 21p and 21q are made of a plate-shaped member molded from a copper plate having a thickness of 1.2 mm.

When attaching the ceramic capacitor 200 to the metal plates 21p and 21q, normally, the lead wire 11p and the metal plate 21p and the lead wire 11q and the metal plate 21q are welded at respective attachment areas. As a welding method of such a case, resistance welding described in Japanese Patent Publication Nos. 2747506 and 2666988 listed below are known.

The resistance welding is a welding method of joining metal members by generating heat (hereinafter referred to as "Joule heat") through electric resistance by flowing a large current for a short period of time to a contacting part of the metal members to be welded, and melting the contacting part by such Joule heat.

As one method of welding the ceramic capacitor 200 and the metal plates 21p and 21q shown in Fig. 5, resistance welding for forming a projection (protrusion) at a welding place of the metal plates 21p and 21q and welding the same is known (see Japanese Patent Publication No. 2747506).

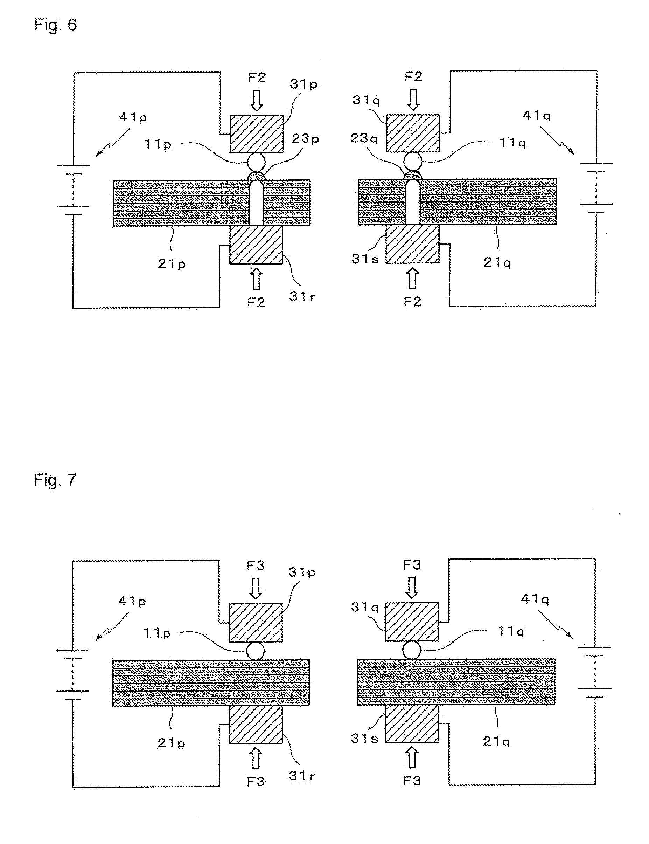

Specifically, description will be given with reference to Fig. 6. Fig. 6 is a view showing a cross-section taken along line P-Q of Fig. 5.

In Fig. 6, the lead wire 11p and the lead wire 11q, the metal plate 21p and the metal plate 21q, a projection 23p and a projection 23q, an electrode 31p and an electrode 31q, an electrode 31r and an electrode 31s, and a power supply 41p and a power supply 41q are configured to be the same, and thus the step related to the welding of the lead wire 11p and the metal plate 21p and the step related to the welding of the lead wire 11q and the metal plate 21q are the same. Therefore, the description related to the welding of the lead wire 11q and the metal plate 21q will not be given.

When forming the projection (protrusion) on a surface of the metal plate 21p and resistance welding the lead wire 11p and the metal plate 21p, first the copper plate is cut out and molded into the plate-shaped member, and thereafter, the projection 23p is formed by extruding from one surface (e.g., surface to which the lead wire is not welded) of the plate-shaped member to an opposite surface (e.g., surface to which the lead wire is welded) by press molding and the like, and the metal plate 21p is molded.

One part of the lead wire 11p is then brought into contact only with the projection 23p. The electrode 31p is pressure-welded to the lead wire 11p at a predetermined pressurizing force F2, and the electrode 31r is pressure-welded to the metal plate 21p at the predetermined pressurizing force F2 such that the electrode 31p and the electrode 31r face each other with the lead wire 11p and the metal plate 21p in between.

In this case, the ceramic capacitor 200 needs to be attached to the metal plate 21p in a stable state, and thus one part of the lead wire 11p to be brought into contact with the projection 23p is preferably near a central part rather than near an end of the lead wire.

Lastly, as soon as the lead wire 11p and the metal plate 21p are respectively pressure-welded by the electrodes 31p and 31r, a large current is flowed between the electrodes 31p and 31r for a short period of time using the power supply 41p. Accordingly, the Joule heat thereby generates at the lead wire 11p and the metal plate 21p, respectively.

In such resistance welding, the electrodes 31p and 31r are respectively made of different materials (e.g., electrode 31p is made of tungsten, electrode 31r is made of chromium copper) such that the lead wire 11p and the metal plate 21p having different electrical resistivity are equally melted during current flow between the electrodes 31p and 31r.

When forming the projection 23p on the metal plate 21p and carrying out the resistance welding, the projection 23p, which is part of the metal plate 21p, is more easily heated than the lead wire 11p and the metal plate 21p as the shape is smaller than the lead wire 11p and the metal plate 21p. Thus, the projection 23p is more rapidly melted than the lead wire 11p and the metal plate 21p.

In this way, a melted and solidified portion, that is, a nugget (not shown) forms between the lead wire 11p and the metal plate 21p, thereby the lead wire 11p and the metal plate 21p can be welded.

As another method of welding the ceramic capacitor 200 and the metal plates 21p and 21q shown in Fig. 5, resistance welding without forming a projection (protrusion) at a welding place of the metal plates 21p and 21q and welding the same is known (see Japanese Patent Publication No. 2666988).

Specifically, description will be given with reference to Fig. 7. Fig. 7 is a view showing a cross-section taken along line P-Q of Fig. 5.

Similar to Fig. 6, in Fig. 7 as well, the lead wire 11p and the lead wire 11q, the metal plate 21p and the metal plate 21q, the electrode 31p and the electrode 31q, the electrode 31r and the electrode 31s, and the power supply 41p and the power supply 41q are configured to be the same, and thus the step related to the welding of the lead wire 11p and the metal plate 21p and the step related to the welding of the lead wire 11q and the metal plate 21q are the same. Therefore, the description related to the welding of the lead wire 11q and the metal plate 21q will not be given.

When joining the lead wire 11p and the metal plate 21p by resistance welding without forming the projection (protrusion) on the surface of the metal plate 21p, the copper plate is first cut out to mold the plate-shaped member, which plate-shaped member becomes the metal plate 21p.

The lead wire 11p and the metal plate 21p are then brought into contact with each other, and thereafter, the electrode 31p is pressure-welded to the lead wire 11p at a predetermined pressurizing force F3 and the electrode 31r is pressure-welded to the metal plate 21p at the predetermined pressurizing force F3 such that the electrode 31p and the electrode 31r face each other with the lead wire 11p and the metal plate 21p in between at the welding place,

In this case as well, the ceramic capacitor 200 needs to be attached to the metal plate 21p in a stable state, and thus the welding place on the lead wire 11p side is preferably near the central part rather than near the end of the lead wire.

Lastly, as soon as the lead wire 11p and the metal plate 21p are respectively pressure-welded by the electrodes 31p and 31r, a large current is flowed between the electrodes 31p and 31r for a short period of time using the power supply 41p. Accordingly, the Joule heat thereby generates at the lead wire 11p and the metal plate 21p, respectively.

In such resistance welding, similar to the above, the electrodes 31p and 31r are respectively made of different materials (e.g., electrode 31p is made of tungsten, electrode 31r is made of chromium copper) such that the lead wire 11p and the metal plate 21p having different electrical resistivity are equally melted during current flow between the electrodes 31p and 31r.

In this case, the generated heat by electrical resistance becomes a maximum at the contacting surface of the lead wire 11p and the metal plate 21p, and thus one part of the lead wire 11p (contacting surface side) and one part of the metal plate 21p (contacting surface side) are melted by the generated heat.
Accordingly, the lead wire 11p and the metal plate 21p can be welded since the respective melted and solidified portion, that is, a nugget (not shown) forms at the contacting surface of the lead wire 11p and the metal plate 21p.

Japanese Patent Publication No. 2747506 discloses a resistance welding method of heterogeneous metal terminals in which, when forming a projection on either a low melting point meta! terminal having a small heat capacity or a high melting point metal plate having a large heat capacity and carrying out welding on the low melting point metal terminal and the high melting point metal plate between electrodes using a capacitor type resistance welding device, the projection is formed on the low melting point metal terminal having a small heat capacity and the heat of the projection during welding is dissipated towards the high melting point metal plate having a large heat capacity.

Japanese Patent Publication No. 2666988 discloses a lead connection method of using electrode plates having a different thickness from each other as a pair of electrode plates for carrying out welding by facing the end face to an overlapping part of the plate-shaped lead strip and the lead wire of circular cross section, and carrying out welding with the thicker electrode plate of the pair of electrode plates arranged on an extending direction side of the lead wire.

### SUMMARY

When joining a lead wire having a diameter of 0.5 mm to a metal plate by resistance welding, a thickness is generally between 0.64 mm and 0.8 mm for the thickness of the metal plate to carry out welding satisfactorily.
Thus, when the thickness of the metal plate exceeds the above thickness, in particular, when the thickness is greater than or equal to twice the diameter of the lead wire, the lead wire and the metal plate become difficult to weld satisfactorily.

Furthermore, when forming the projections 23p and 23q respectively on the surfaces of the metal plates 21p and 21q, and carrying out resistance welding on the lead wire 11p and the metal plate 21p, and the lead wire 11q and the metal plate 21q, respectively, distortion may occur at the metal plates 21p and 21q due to the formation of the projections 23p and 23q. In particular, the distortion is large when the projection is formed on a surface of a thick metal plate.
Thus, parts may shift by such distortion when assembling an electronic device (not shown), whereby it becomes difficult to mass produce the metal plates 21p and 21q attached with the ceramic capacitor 200 using the resistance welding.

In addition to the above problems, the man-hour in molding the metal plates 21p and 21q increases due to the forming of the projections 23p and 23q, and thus the problem of increase in cost also arises.

Moreover, as shown in Fig. 7, when joining the lead wire 11p and the metal plate 21p, and the lead wire 11q and the metal plate 21q by resistance welding without forming the projection on the surfaces of the metal plates 21p and 21q, the Joule heat generated at the metal plates 21p and 21q diffuses to the entire metal plates 21p and 21p, and thus a state of heat distribution degrades. Accordingly, the lead wire 11p and the metal plate 21p, as well as the lead wire 11q and the metal plate 21q cannot be equally melted, and only the welding place cannot be heated in a concentrated manner due to the degradation of the heat distribution state.

Specifically, since the metal plates 21p and 21q are more difficult to heat than the lead wires 11p and 11q due to diffusion of heat, the lead wires 11p and 11q are more rapidly melted than the metal plates 21p and 21q at the respective contacting surface of the lead wire 11p and the metal plate 21p, and the lead wire 11q and the metal plate 21q. That is, the lead wires 11p and 11q are melted in excess before the metal plates 21p and 21q are melted.

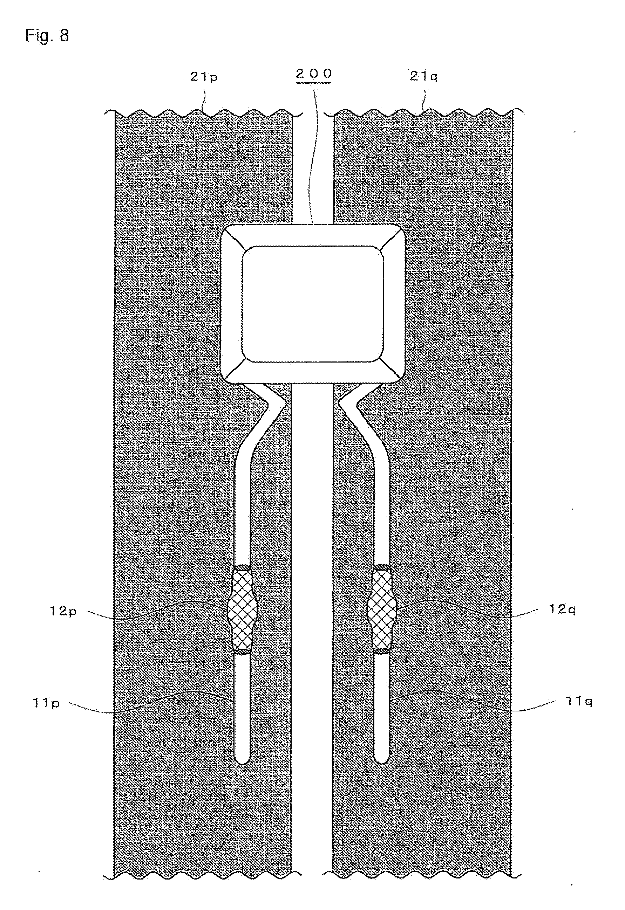

Thus, at the respective welding place of the lead wires 11p and 11q, flat parts 12p, 12q squashed in the perpendicular direction with respect to the plane of drawing, as shown in Fig. 8, form at the lead wires 11p and 11q facing the electrodes 31p, 31q side, whereby a problem of lowering in the welding strength arises.

In addition to the above problems, the welding extends even to a place where welding is unnecessary as the Joule heat diffuses to the entire metal plates 21p and 21q, and furthermore, explosion may occur at the welding place due to excessive heating of the lead wires 11p and 11q.

The present invention has been devised to solve the above-mentioned problems and an object thereof is to provide a welding method and a welding structure capable of carrying out satisfactory welding without forming the projection when joining the conductive terminals by resistance welding.

In accordance with one aspect of the present invention, a welding method of conductive terminals for performing resistance welding on a first conductive terminal and a second conductive terminal includes the steps of: bringing the first conductive terminal into contact with a projection formed on the second conductive terminal and projecting in a direction orthogonal to a longitudinal direction of the terminal; and joining a first electrode to the first conductive terminal by pressure welding and joining a second electrode to the projection by pressure welding with the longitudinal direction of the first conductive terminal and the projecting direction of the projection orthogonal to each other, and flowing a current between each electrode to weld the first conductive terminal and the projection at a contacting surface thereof.

In accordance with another aspect of the present invention, a welding structure according to the present invention is a welding structure of conductive terminals in which a first conductive terminal and a second conductive terminal are resistance-welded, wherein the second conductive terminal includes a projection projecting in a direction orthogonal to a longitudinal direction of the terminal, and the first conductive terminal is resistance-welded to the projection with the longitudinal direction of the terminal and a longitudinal direction of the projection orthogonal to each other.

### BRIEF DESCRIPTION OF THE DRAWINGS

Fig. 1 is a view showing a welding method and a welding structure according to an embodiment of the present invention;
Fig. 2 is a cross-sectional view taken along line A-B of Fig. 1;
Fig. 3 is a table showing a welding strength;
Fig. 4 is a view showing an example of a ceramic capacitor and a metal plate welded by the welding method of the present invention;
Fig. 5 is a view showing a conventional welding method and a welding structure;
Fig. 6 is a cross sectional view taken along line P-Q of Fig. 5;
Fig. 7 is a cross-sectional view showing another conventional welding method and a welding structure; and
Fig. 8 is a view showing an example of a ceramic capacitor and a metal plate welded by the conventional welding method.

### DETAILED DESCRIPTION

Hereinafter, preferred embodiments of the present invention will be described with reference to the drawings.

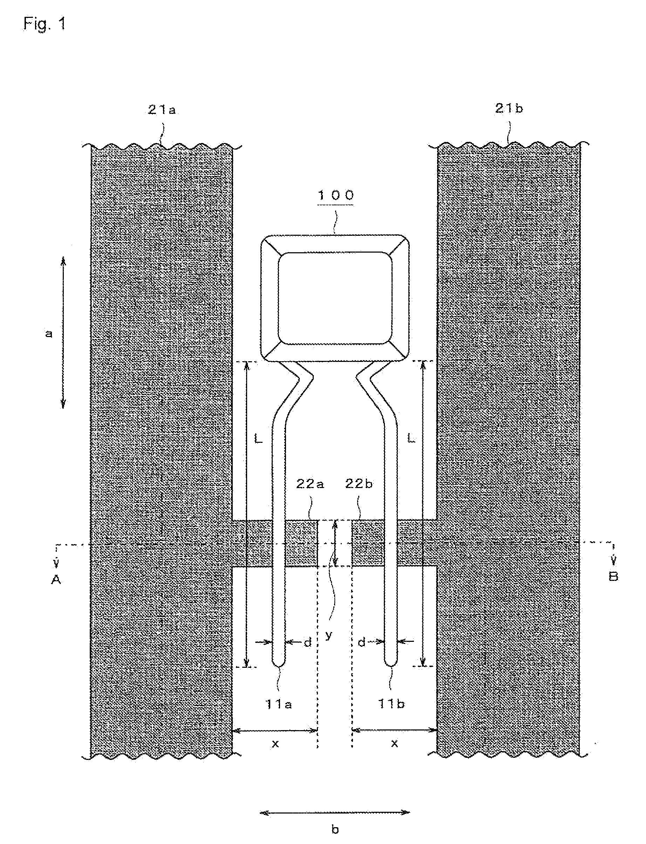

In Figs. 1 to 4, same reference numerals are denoted for the same or corresponding portions.

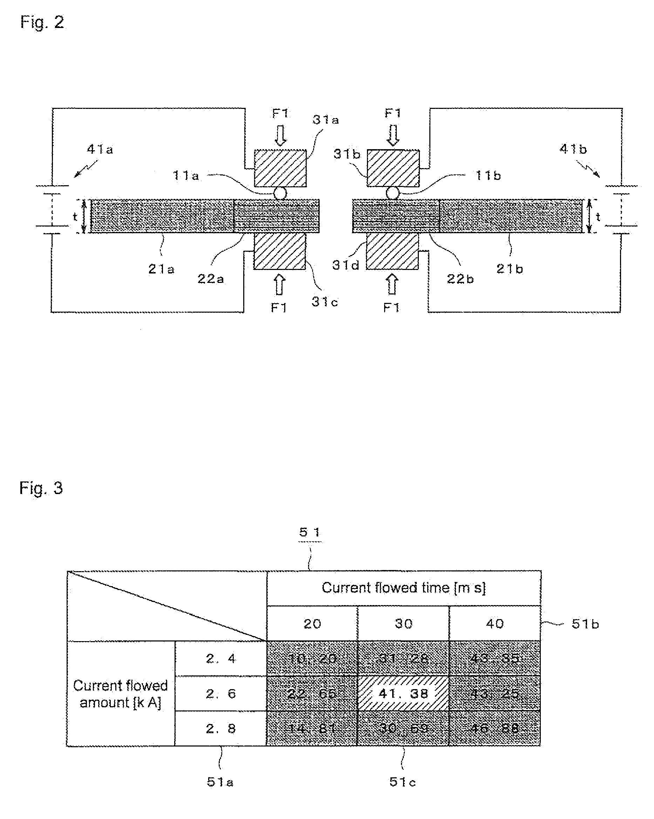

Fig. 1 is a view showing one embodiment of a welding method and a welding structure according to the present invention.
In the figure, 100 denotes a ceramic capacitor, and 21a and 21b denote metal plates (lead frames) for attaching the ceramic capacitor 100.
In the present embodiment, a diameter of lead wires 11a and 11b is between about 0.5 mm and 0.75 mm, the ceramic capacitor 100 including the lead wires 11a and 11b made of steel wire is used, and the metal plates 21a and 21b in which a copper plate having a thickness of between 1.0 mm and 1.8 mm is molded to a shape described below are used.
For instance, in Fig. 1, a diameter d of the lead wires 11a and 11b of the ceramic capacitor 100 is 0,5 mm, and a thickness t (see Fig. 2) of the metal plates 21a and 21b is 1.2 mm. The lead wires 11a and 11b are one embodiment of a first conductive terminal of the present invention, and the metal plates 21a and 21b are one embodiment of a second conductive terminal of the present invention.

As described above, when joining the lead wire having a diameter of 0.5 mm to the metal plate by resistance welding, a typical thickness is between 0.64 mm and 0.8 mm for the thickness of the metal plate to carry out the welding satisfactorily.
Thus, when the thickness of the metal plates 21a and 21b exceeds the above thickness, in particular, when the thickness is greater than or equal to twice the diameter of the lead wires 11a and 11b as in the present embodiment, the lead wire 11a and the metal plate 21a, and the lead wire 11b and the metal plate 21b may not be satisfactorily welded.

Thus, in the present embodiment, the following measures are taken to satisfactorily weld the lead wire 11a and the metal plate 21a, and the lead wire 11b and the metal plate 21b even when the thickness of the metal plates 21a and 21b is thick.

First, the metal plates 21a and 21b are molded by cutting the copper plate and the like so that one part of the metal plate projects out in a direction orthogonal to a longitudinal direction at the same plane as the surface of the metal plate.
Specifically, as shown in Fig. 1, projections 22a and 22b in which a dimension (hereinafter referred to as "length") in a direction b orthogonal to a longitudinal direction a of the metal plates 21a and 21b is x (mm) and a dimension (hereinafter referred to as "width") in the same direction as the longitudinal direction a is y (mm) are formed at one part of the metal plates 21a and 21b, respectively.

In the present embodiment, the projections 22a and 22b are respectively formed such that the relationship between the length x and the width y is x > y and x ≥ 3.0, 1.5 ≤ y ≤ 2.0 according to the diameter d of the lead wires 11a and 11b and/or the thickness t of the metal plates 21a and 21b.
For instance, in Fig. 1, the length x of the projections 22a and 22b formed at the metal plates 21a and 21b is 4.0 mm and the width y is 1.5 mm.

The ceramic capacitor 100 is then attached to the metal plates 21a and 21b molded in the above manner. The attachment method will be described with reference to Figs. 1 and 2. Fig. 2 is a view showing a cross-section taken along line A-B in Fig. 1.

When attaching the ceramic capacitor 100 to the metal plates 21a and 21b, the lead wire 11a and the metal plate 21a are brought into contact with each other and resistance-welded, and the lead wire 11b and the metal plate 21b are brought into contact with each other and resistance-welded, as shown in Figs. 1 and 2.

Specifically, when carrying out welding on the lead wire 11a and the metal plate 21a, part of the lead wire 11a and the projection 22a are brought into contact with each other such that the longitudinal direction (a direction) of the lead wire 11a and the projecting direction (b direction) of the projection 22a become orthogonal, as shown in Fig. 1.
Thereafter, as shown in Fig. 2, the electrode 31a is pressure-welded to the lead wire 11a at a predetermined pressurizing force F1 and the electrode 31c is pressure-welded to the projection 22a at the predetermined pressurizing force F1 such that the electrode 31a and the electrode 31c face each other with the lead wire 11a and the projection 22a in between. Thus, the lead wire 11a and the projection 22a are sandwiched with the pressurizing force F1 by the electrodes 31a and 31c. The electrode 31a serves as a first electrode of the present invention, and the electrode 31c serves as a second electrode of the present invention.

Similarly, when carrying out welding on the lead wire 11b and the metal plate 21b, part of the lead wire 11b and the projection 22b are brought into contact with each other such that the longitudinal direction (a direction) of the lead wire 11b and the projecting direction (b direction) of the projection 22b become orthogonal (see Fig. 1).
Thereafter, the electrodes 31b is pressure-welded to the lead wire 11b at the predetermined pressurizing force F1 and the electrode 31d is pressure-welded to the projection 22b at the predetermined pressurizing force F1 such that the electrode 31b and the electrode 31d face each other with the lead wire 11b and the projection 22b in between (see Fig. 2). Thus, the lead wire 11b and the projection 22b are sandwiched with the pressurizing force F1 by the electrodes 31b and 31d. The electrode 31b serves as a first electrode of the present invention, and the electrode 31d serves as a second electrode of the present invention.

A large current is flowed between the electrodes 31a and 31c for a short period of time using the power supply 41a as soon as the lead wire 11a and the projection 22a are pressure-welded by the electrodes 31a and 31c, and a large current is flowed between the electrodes 31b and 31d for a short period of time using the power supply 41b as soon as the lead wire 11b and the projection 22b are pressure-welded by the electrodes 31b and 31d.

In the present embodiment, magnitude of the pressurizing force F1 applied by the electrodes 31a and 31c and the electrodes 31b and 31d is 120 (N).
When the current of the same magnitude is flowed, the projections 22a and 22b made of copper plate having small electrical resistivity are hard to be heated compared to the lead wires 11a and 11b made of steel wire having large electrical resistivity. Thus the electrodes 31a and 31b are made of chromium copper having small electrical resistivity and the electrodes 31c and 31d are made of tungsten having large electrical resistivity to equally melt the lead wire 11a and the projection 22a, and the lead wire 11b and the projection 22b at the respective contacting surface when a current is flowed between the electrodes 31a and 31c and the electrodes 31b and 31d.

In the welding method and the welding structure described above, when the lead wire 11a and the projection 22a and the lead wire 11b and the projection 22b are resistance-welded with the magnitude of the current to flow between the electrodes 31a and 31c and the electrodes 31b and 31d changed in a range of between 2.4 kA and 2.8 kA and the current flowed time changed between 20 ms and 40 ms, the result shown in table 51 of Fig. 3 is obtained for the welding strength by the relevant wending
The welding strength of table 51 is the measurement result obtained by measuring the force required when stripping the welded lead wire 11a and the projection 22a, and the lead wire 11b and the projection 22b, respectively.

In Fig. 3, 51a indicates the magnitude (hereinafter referred to as "current flowed amount") of the current flowed between the electrodes 31a and 31c and 51b indicates time (hereinafter referred to as "current flowed time") the current is flowed between the electrodes 31a and 31c.
Furthermore, 51c indicates the welding strength at the welding place of the lead wire 11a and the projection 22a, and shows each measurement result of when the current flowed amount 51a and the current flowed time 51b are respectively changed.
In the present embodiment, the results similar to table 51 are obtained even when the lead wire 11b and the projection 22b are resistance-welded by the electrodes 31b and 31d, and thus the description thereof will not be given.

In table 51 of Fig. 3, for example, the welding strength 51c of when a current is flowed between the electrodes 31a and 31c with the current flowed amount 51a as 2.4 kA and the current flowed time 51b as 20 ms is 10.20 N. That is, the force of 10.20 N is necessary when stripping the welded lead wire 11a and the projection 22a.
Similarly, the welding strength 51c of when a current is flowed between the electrodes 31a and 31c with the current flowed amount 51a as 2.8 kA and the current flowed time 51b as 40 ms is 46.88 N. That is, the force of 46.88 N is necessary when stripping the welded lead wire 11a and the projection 22a.

Each welding strength 51c in table 51 is the welding strength of when the number of sampling is one, and thus the inventor of the present invention performed a verification on the condition for satisfactorily welding the lead wire 11a and the projection 22a, that is, a satisfactory combination of the current flowed amount 51a and the current flowed time 51b in flowing a current between the electrodes 31a and 31c by further increasing the number of sampling (e.g., number of sampling is 100).

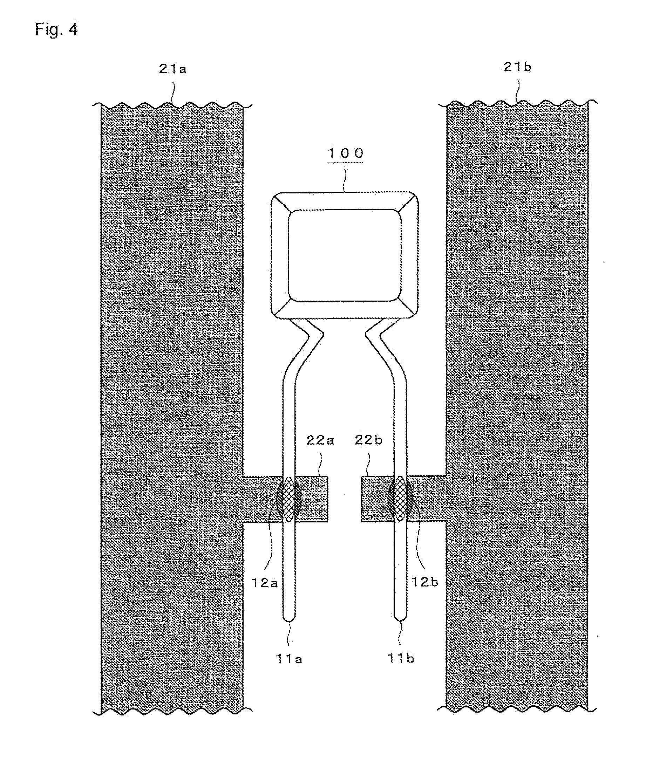

As a result of performing trial on various combinations, the lead wire 11a was welded in a state shown with a shaded area 12a in Fig. 4 with the current flowed amount 51a as 2.6 kA and the current flowed time 51b as 30 ms. Specifically, when confirmed that the lead wire 11a is welded in a state sunk into the projection 22a, and the welded lead wire 11a and the projection 22a are stripped, a tubular nugget was found on the projection 22a side.

Thus, in the resistance welding, the condition for satisfactorily performing welding on the lead wire 11a and the projection 22a in the present embodiment is the portion surrounded by the shaded area in table 51, that is, when the current flowed amount 51a is 2.6 kA and the current flowed time 51b is 30 ms as the lead wire 11a and the projection 22a were experimentally proved to be satisfactorily welded without producing a flat part squashed by the electrode 31a at the welding place of the lead wire 11a. In table 51, the welding strength in this case is 41.38 N.

Thus, in the embodiment described above, the projections 22a and 22b smaller than the metal plates are formed at part of the metal plates 21a and 21b as the welding place of when carrying out welding on the lead wires 11a and 11b. Since part of the lead wire 11a and the projection 22a are brought into contact with each other and part of the lead wire 11b and the projection 22b are brought into contact with each other such that the longitudinal direction of the lead wires 11a and 11b and the projecting direction of the projections 22a and 22b respectively become orthogonal, when a current is flowed between the electrodes 31a and 31c and the electrodes 31b and 31d, the Joule heat generated at the projections 22a and 22b by flowing the current can be suppressed from diffusing to the entire metal platens 21a and 21b.

Thus only the welding place can be heated in a concentrated manner, and the lead wire 11a and the metal plate 21a and the lead wire 11b and the metal plate 21b can be respectively satisfactorily welded even when carrying out welding on the lead wire with the metal plate having a thickness of greater than or equal to twice the diameter of the lead wire.

As heat distribution becomes satisfactory, the lead wire 11a and the metal plate 21a, and the lead wire 11b and the metal plate 21b can be welded, respectively, without excessively melting the lead wires 11a and 11b, that is, without producing the flat parts 12p, 12q as shown in Fig. 8. Thus, the formation of the nugget stabilizes in the relevant welding, whereby the welding strength does not lower.

Furthermore, the welding is prevented from extending to the place where welding is unnecessary since the welding place can be confined.

In the embodiment described above, the formation of projection at the metal plates 21a and 21b is not required, and thus distortion from molding will not occur at the metal plates 21a and 21b, and thus shift of parts due to distortion of the metal plates 21a and 21b will not occur when assembling the electronic device (not shown). In addition, since the step of forming the projection is not included in molding the metal plates 21a and 21b, the cost in molding the metal plate can be suppressed.

In the present invention, various embodiments other than those described above can be adopted. For instance, the lead wire of the ceramic capacitor is attached to the metal plate in the embodiment described above, but the present invention is not limited thereto, and the lead wire of other electronic parts (e.g., semiconductor) may be attached to the metal plate.

Furthermore, the lead wire and the metal plate are resistance-welded in the embodiment described above, but the present invention is not limited thereto, and conductive terminals (e.g., metal rod and metal plate) in which the length and the width are different from each other may be resistance-welded.

In the embodiment described above, the steel wire is used for the lead wire and the copper plate is used for the metal plate, but the present invention is not limited thereto, and the lead wire and the metal plate may be made from a similar material (e.g., iron).

Furthermore, in the embodiment described above, the projection has a square shape, but the present invention is not limited thereto, and the shape may be such that the strength of the projection is maintained and the length in the direction orthogonal to the longitudinal direction of the metal plate is longer than the width of the longitudinal direction (e.g., semi-ellipse).

In accordance with one aspect of the present invention, a welding method of conductive terminals for performing resistance welding on a first conductive terminal and a second conductive terminal includes the steps of: bringing the first conductive terminal into contact with a projection formed on the second conductive terminal and projecting in a direction orthogonal to a longitudinal direction of the terminal; and joining a first electrode to the first conductive terminal by pressure welding and joining a second electrode to the projection by pressure welding with the longitudinal direction of the first conductive terminal and the projecting direction of the projection orthogonal to each other, and flowing a current between each electrode to weld the first conductive terminal and the projection at a contacting surface thereof.

Therefore, the Joule heat generated at the second conductive terminal by flowing a current can be suppressed from diffusing to the entire second conductive terminal when the current is flowed between the first electrode and the second electrode, whereby the first conductive terminal and the second conductive terminal can be satisfactorily welded without arranging the projection even when the thickness of the terminal is thick.

In the welding method according to the present invention, preferably, a length in the projecting direction of the projection is greater than a width in a direction orthogonal to the projecting direction of the projection and a width of the first conductive terminal, and a width of the projection is less than a length of the first conductive terminal.

The heat distribution thus becomes satisfactory, and the first conductive terminal and the second conductive terminal can be welded without excessively melting the first conductive terminal, that is, without producing a flat part squashed by the first electrode, and the welding can be carried out at a satisfactory welding strength.

In the welding method according to the present invention, preferably, a width d (mm) of the first conductive terminal is 0.5 ≤ d ≤ 0.75, and a thickness t (mm) of the second conductive terminal is 1.0 ≤ t ≤ 1.8.

In the welding method according to the present invention, preferably, a length x (mm) in the projecting direction of the projection is x ≥ 3, and a width y (mm) in a direction orthogonal to the projecting direction of the projection is 1,5 ≤ y ≤ 2.

In the welding method according to the present invention, the first conductive terminal may be a steel wire having a circular cross-section, and the second conductive terminal may be a copper plate having a flat plate shape.

Therefore, the welding method can be applied as is to the conventionally used electronic component without using a special material for the conductive terminal to be welded.

In the welding method according to the present invention, the first electrode may be made of chromium copper, and the second electrode may be made of tungsten.

Therefore, the first conductive terminal and the second conductive terminal can be equally melted even when the electrical resistivity of the first conductive terminal and the second conductive terminal differ from each other, that is, even when performing welding on the first conductive terminal made of steel wire and the second conductive terminal made of copper plate, and thus the first conductive terminal and the second conductive terminal can be welded without excessively melting the first conductive terminal, that is, without producing the flat part and the welding can be carried out at satisfactory welding strength.

In accordance with another aspect of the present invention, a welding structure according to the present invention is a welding structure of conductive terminals in which a first conductive terminal and a second conductive terminal are resistance-welded, wherein the second conductive terminal incudes a projection projecting in a direction orthogonal to a longitudinal direction of the terminal, and the first conductive terminal is resistance-welded to the projection with the longitudinal direction of the terminal and a longitudinal direction of the projection orthogonal to each other.

Thus, the Joule heat generated at the second conductive terminal by flowing a current can be suppressed from diffusing to the entire second conductive terminal when the current is flowed between the first electrode and the second electrode, whereby the first conductive terminal and the second conductive terminal can be satisfactorily welded without arranging the projection even when the thickness of the terminal is thick.

According to the present invention, the Joule heat generated by flowing a current can be suppressed from diffusing to the entire conductive terminal, whereby the first conductive terminal and the second conductive terminal can be satisfactorily welded without arranging the projection.

## Claims

1. A welding method of conductive terminals (11a, 11b, 21a, 21b) for performing resistance welding on a first conductive terminal (11a, 11b) and a second conductive terminal (21a, 21b); the method comprising the steps of:
bringing the first conductive terminal (11a, 11b) into contact with a projection (22a, 22b) formed on the second conductive terminal (21a, 21b) and projecting in a direction orthogonal to a longitudinal direction of the terminal (21a, 21b); and
joining a first electrode (31a, 31b) to the first conductive terminal (11a, 11b) by pressure welding and joining a second electrode (31c, 31d) to the projection (22a, 22b) by pressure welding with the longitudinal direction of the first conductive terminal (11a, 11b) and the projecting direction of the projection (22a, 22b) orthogonal to each other, and flowing a current between each electrode (31a, 31b, 31c, 31d) to weld the first conductive terminal (11a, 11b) and the projection (22a, 22b) at a contacting surface thereof.

2. The welding method of the conductive terminals (11a, 11b, 21a, 21b) according to claim 1, **characterized in that** a length in the projecting direction of the projection (22a, 22b) is greater than a width in a direction orthogonal to the projecting direction of the projection (22a, 22b) and a width of the first conductive terminal (11a, 11b), and a width of the projection (22a, 22b) is less than a length of the first conductive terminal (11a, 11b).

3. The welding method of the conductive terminals (11a, 11b, 21a, 21b) according to claim 1, **characterized in that** a width d (mm) of the first conductive terminal (11a, 11b) is 0.5 ≤ d ≤ 0.75, and a thickness t (mm) of the second conductive terminal (21a, 21b) is 1.0 ≤ t ≤ 1.8.

4. The welding method of the conductive terminals (11a, 11b, 21a, 21b) according to claim 1, **characterized in that** a length x (mm) in the projecting direction of the projection (22a, 22b) is x ≥ 3, and a width y (mm) in a direction orthogonal to the projecting direction of the projection (22a, 22b) is 1.5 ≤ y ≤ 2.

5. The welding method of the conductive terminals (11a, 11b, 21a, 21b) according to claim 1, **characterized in that** the first conductive terminal (11a, 11b) is a steel wire having a circular cross-section, and the second conductive terminal (21a, 21b) is a copper plate having a flat plate shape.

6. The welding method of the conductive terminals (11a, 11b, 21a, 21b) according to claim 5, **characterized in that** the first electrode (31a, 31b) is made of chromium copper, and the second electrode (31c, 31d) is made of tungsten.

7. A welding structure of conductive terminals (11a, 11b, 21a, 21b) in which a first conductive terminal (11a, 11b) and a second conductive terminal (21a, 21b) are resistance-welded, **characterized in that**
the second conductive terminal (21a, 21b) includes a projection (22a, 22b) projecting in a direction orthogonal to a longitudinal direction of the terminal (21a, 21b), and the first conductive terminal (11a, 11b) is resistance-welded to the projection (22a, 22b) with the longitudinal direction of the terminal (11a, 11b) and a longitudinal direction of the projection (22a, 22b) orthogonal to each other.
